# EUROPEAN PATENT APPLICATION

(11) **EP 3 276 550 A1**
(43) Date of publication of application: **31.01.2018**
(21) Application number: 17184139.8
(22) Date of filing: 31.07.2017
(51) Int. Cl.: G06Q 10/06, G06Q 50/28, B66B 29/00

(54) **BIG DATA ANALYZING AND PROCESSING SYSTEM AND METHOD FOR PASSENGER CONVEYOR**

(30) Priority: 29.07.2016 CN 201610610348
(71) Applicant: Otis Elevator Company, Farmington CT 06032 (US)
(72) Inventor: SENGER, Alois, Gresten 3264 (AT); CHEN, Yanying, Guangzhou, Beijing 510425 (CN); HU, Zhaoxia, Hangzhou, Zhejiang 310019 (CN); JIA, Zhen, Pudong New Area, Shanghai 201204 (CN); LI, Jianguo, Jianggan District, Zhejiang 310019 (CN); FANG, Hui, Pu Dong New Area, Shanghai 201204 (CN); ZHAO, Jianwei, Pu Dong New Area, Shanghai 201206 (CN); LI, Qiang, Pudong New Area, Shanghai 201206 (CN); SU, Anna, Pudog New Area, Shanghai 201203 (CN); FINN, Alan Matthew, Hebron, CT Connecticut 06248 (US); MORRIS, Nigel, West Hartford, CT Connecticut 06107 (US)
(74) Representative: Ramsay, Laura Anne

(57) **Abstract**

The present invention provides a big data analysis and processing system (100) and method for a passenger transport apparatus (500), wherein the big data analysis and processing system (100) comprises: a data collection module (100), the data collection module comprising: an imaging sensor and/or depth sensing sensor (111, 112), configured to constantly collect image data and/or depth map data of at least one region of the passenger transport apparatus (500); and an image processing module (102), configured to process the image data and/or depth map data to acquire a plurality of types of data of the passenger transport apparatus, comprising one or more of device running data, load data, abnormal behavior data and contingency data; a database (200), the database gathering and storing the plurality of types of data; and a statistical analysis unit (300), the statistical analysis unit performing classification and statistics on the plurality of types of data according to a statistical analysis method, and generating an analysis report.

## Description

### Technical field

The present invention relates to the technical field of passenger transport apparatuses, and more particularly, the present invention relates to a big data analysis and processing system and a big data processing method for a passenger transport apparatus. The passenger transport apparatus herein refers to an automatic escalator and a moving walkway.

### Background

At present, the operator of a passenger transport apparatus knows very little about daily running conditions of the passenger transport apparatus. The operator is unable to learn daily running environment, load conditions or use time and down time, etc. of the passenger transport apparatus. The operator always dispatches technicians to the site for maintenance periodically, while sometimes no maintenance is needed on the site. Alternatively, the technical staff must go to the site for maintenance immediately after a client requests for repair.

### Summary

An objective of the present invention is to solve or at least alleviate the problem existing in the prior art.

The present invention provides a big data analysis and processing system for a passenger transport apparatus, the big data analysis and processing system comprising:
a data collection module, the data collection module comprising:
   a sensor assembly, configured to collect image data and/or depth map data; and
   an image processing module, configured to process the image data and/or depth map data to acquire a plurality of types of data of the passenger transport apparatus, comprising one or more of device running data, load data, abnormal behavior data and contingency data;
   a database, the database gathering and storing the plurality of types of data; and
a statistical analysis unit, the statistical analysis unit performing classification and statistics on the plurality of types of data according to a statistical analysis method, and generating an analysis report.

One or more examples of such a system are provided by claims 2 to 8.

In addition, the present invention further provides a big data analysis and processing method for a passenger transport apparatus, as defined by claim 9. One or more examples of such a method are provided by claims 10 to 15.

### Brief description of the accompanying drawings

With reference to the accompanying drawings, the above and other features of the present invention will become apparent, in which:
Fig. 1 shows a schematic structural diagram of a big data analysis and processing system for a passenger transport apparatus according to an embodiment of the present invention and an automatic escalator;
Fig. 2 shows a flow chart of a big data analysis and processing method for a passenger transport apparatus according to an embodiment of the present invention;
Fig. 3 shows a detailed flow chart of step S1 of a big data analysis and processing method for a passenger transport apparatus according to an embodiment of the present invention;
Fig. 4 shows a detailed flow chart of step S2 of a big data analysis and processing method for a passenger transport apparatus according to an embodiment of the present invention;
Fig. 5 shows a detailed flow chart of step S3 of a big data analysis and processing method for a passenger transport apparatus according to an embodiment of the present invention;
Fig. 6 shows a detailed flow chart of an application of a big data analysis and processing method for a passenger transport apparatus according to an embodiment of the present invention;
Fig. 7 shows a detailed flow chart of an application of a big data analysis and processing method for a passenger transport apparatus according to another embodiment of the present invention; and
Fig. 8 shows a detailed flow chart of an application of a big data analysis and processing method for a passenger transport apparatus according to another embodiment of the present invention.

### Detailed description of preferred embodiments

It would be easy to be understood that those of ordinary skills in the art may propose a plurality of interchangeable structural modes and implementation methods according to the technical solution of the present invention without changing the essential spirit of the present invention. Therefore, the following specific embodiments and accompanying drawings are merely exemplary description of the technical solution of the present invention, and should not be deemed as all of the present invention or deemed as limitations or restrictions to the technical solution of the present invention.

The positional terms of up, down, left, right, before, behind, front, back, top, bottom, etc. which are referred to or possibly referred to in the present description are defined with respect to the construction shown in the various figures, and they are relative concepts; therefore, they may possibly change correspondingly according to different positions thereof and different use states. Hence, these and other positional terms should also not be construed as restrictive terms.

It should be understood that in the present invention, the term "passenger transport apparatus" only refers to an automatic escalator and a moving walkway.

It should be understood that in the present invention, the term "imaging sensor" may be various types of 2D image sensors. It should be understood that any image sensor that is able to shoot and acquire an image frame comprising pixel grey scale information may be applicable here. Certainly, an image sensor that is able to shoot and acquire an image frame comprising pixel grey scale information and color information (for example, RGB information) may also be applicable here.

It should be understood that in the present invention, the term "depth sensing sensor" may be any 1D, 2D and 3D depth sensor or a combination thereof. Such a sensor may be operated in optics, electromagnetism or acoustic spectrum which is able to generate a depth map (also known as a point cloud or occupying a grid) having a corresponding size. Various depth sensing sensor techniques and apparatuses comprise but are not limited to a structured light measurement, phase shift measurement, flight time measurement, a stereotriangulation apparatus, an optical triangulation apparatus plate, an optical field camera, a coded aperture camera, a computational imaging technique, simultaneous localization and mapping (SLAM), an imaging radar, an imaging sonar, an echo location apparatus, a scanning LIDAR, a flicker LIDAR, a passive infra-red (PIR) sensor and a small focal plane array (FPA) or a combination comprising at least one of the aforementioned techniques or apparatuses. Different techniques may comprise active (transmitting and receiving a signal) or passive (only receiving a signal) off-band operations which may also be on electromagnetism or acoustic spectrum (such as vision and infra-red). Using depth sensing may have particular advantages over conventional 2D imaging, and using infra-red sensing may have particular benefits over visible spectrum imaging. Alternatively or in addition, the sensor may also be enabled to be an infra-red sensor having one or more pixel space resolutions, for example, a passive infra-red (PIR) sensor or a small IR focal plane array (FPA).

It should be understood that there may be differences in property and quantity in terms of the degree of providing a number of advantages in depth sensing between the 2D imaging sensor (for example, a conventional security camera) and the 1D, 2D or 3D depth sensing sensor. In 2D imaging, a reflected color (a mixture of wavelengths) from the first object in each radial direction of the imager is captured. Then, the 2D image may comprise a combined spectrum of source illumination and spectrum reflection coefficients of objects in the scene. The 2D image may be interpreted into a picture by a person. In the 1D, 2D or 3D depth sensing sensor, color (spectrum) information does not exist; and more exactly, a distance (depth, range) from a radial direction (1D) or direction (2D, 3D) of the sensor to a first reflective object is captured. The 1D, 2D and 3D techniques may have an inherent maximum detectable range limitation and may have a spatial resolution relatively lower than a typical 2D imager. In terms of relative immunity to environmental illumination problems, compared to conventional 2D imaging, using 1D, 2D or 3D depth sensing may advantageously provide an improved operation, better separation for a shielded object and better privacy protection. Using infra-red sensing may have particular benefits over visible spectrum imaging. For example, a 2D image may be unable to be transformed into a depth map and a depth map can also not have the ability of being transformed into a 2D image (for example, artificially allocating continuous colors or grey scales to a continuous depth may enable a person to roughly interpret a depth map in a way slightly similar to how a person sees a 2D image, which is not an image in general sense).

It should be understood that the imaging sensor and the depth sensing sensor can be integrated as an RGB-D sensor, which may acquire RGB information and depth (D) information at the same time.

It should be understood that the imaging sensor and/or depth sensing sensor may be integrated with an infra-red thermal imager so as to detect the temperature of a component and other information at the same time.

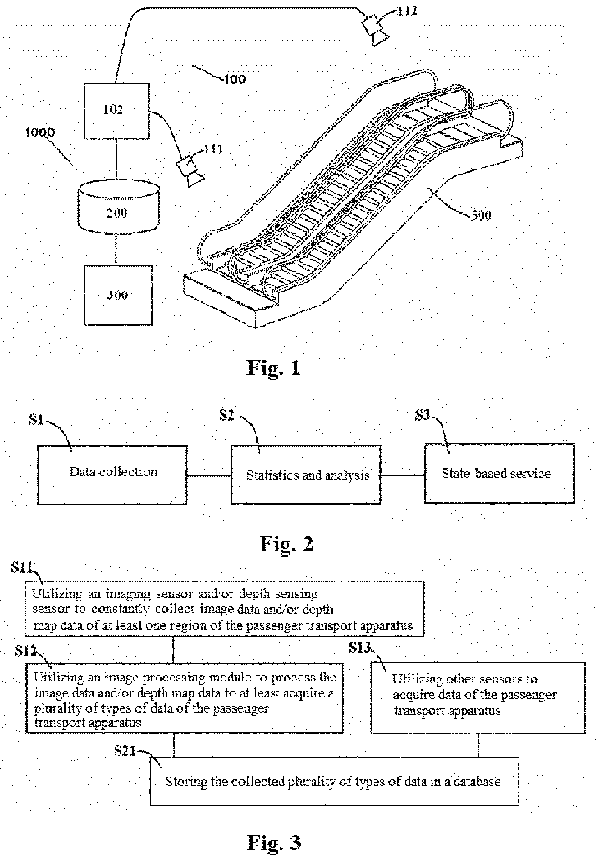

First referring to Fig. 1, which shows a schematic diagram of a big data analysis and processing system 1000 for an automatic escalator 500 according to one embodiment of the present invention, the big data analysis and processing system 1000 comprises: a data collection module 100, a database 200 and a statistical analysis unit 300. The data collection module 100 comprises: a sensor assembly, which comprises a first imaging sensor and/or depth sensing sensor 111 provided at the top of the lower end of the automatic escalator 500, and a second imaging sensor and/or depth sensing sensor 112 provided at the top of the upper end of the automatic escalator 500, wherein the imaging sensors and/or depth sensing sensors 111 and 112 are configured to collect image data and/or depth map data of the lower end and upper end of the passenger transport apparatus 500. The data collection module 100 further comprises an image processing module 102, the image processing module 102 being configured to process the image data and/or depth map data collected by the imaging sensors and/or depth sensing sensors 111 and 112 to acquire a plurality of types of data of the passenger transport apparatus, comprising one or more of device running data, load data, abnormal behavior data and contingency data. The acquiring a plurality of types of data of the passenger transport apparatus comprising one or more of device running data, load data, abnormal behavior data and contingency data refers to acquiring one type, two types, three types or four types of the four types of data mentioned above. The various types of collected data are stored in the database 200. The database 200 may be provided at a near end of each automatic escalator 500, or a plurality of automatic escalators 500 in the same building may share one database 200, or various automatic escalators 500 in a certain region may share one database 200. In other words, the database 200 may be provided locally or at a cloud end. In the case where the database is provided at the near end of each automatic escalator 500 or in other cases, the database 200 is networked, so that the database 200 can be accessed via a network. The statistical analysis unit 300 may access the database 200 via the network or in other manners. Based on a large volume of a plurality of types of data, the statistical analysis unit 300 performs classification and statistics on the plurality of types according to various statistical analysis methods, and generates an analysis report. The analysis report may comprise a health report, a daily running record, a daily failure record, an inappropriate behavior record and so on.

In addition, although Fig. 1 shows the imaging sensors and/or depth sensing sensors 111 and 112 provided at the top sides of two ends of the automatic escalator 500, the quantity and set-up position of the imaging sensors and/or depth sensing sensors are not limited to what is shown in the figure. For example, there may be only one imaging sensor and/or depth sensing sensor, which are provided in the middle of the automatic escalator 500, or two or more imaging sensors and/or depth sensing sensors.

By virtue of the imaging sensor and/or depth sensing sensor and the image processing module 102, the data collection module 100 is able to collect a plurality of types of data. Compared to conventional sensors which may only collect one type of data, a combination of an imaging sensor and/or depth sensing sensor and an image processing module may easily obtain a greater volume of data, so that an automatic escalator operator may have a greater amount of information, and based on classification, statistics and analysis of the large amount of data, the operator can be guided to provide a higher quality of state-based service. In some embodiments, the data collection module 100 comprises an RGB-D sensor integrating an imaging sensor and a depth sensing sensor and provided at the top of an entry end and an exit end of the automatic escalator 500.

In some embodiments, the device running data comprises but is not limited to: a running speed, comprising a step tread speed, a handrail belt speed, etc., a braking distance, tautness of the handrail belt, a component temperature, a running time, a down time and so on. For example, the running speed may be calculated by an optical fluxon-based image analysis method. Although generally the handrail belt speed is hard to be determined by the optical fluxon method since generally there is no significant feature on the handrail belt (which is generally black as a whole), in such a case, an extra mark or change design which is able to be detected by the sensors 111 and 112 may be added to the handrail belt, for example, some stripes, graphs and trademarks. The detection of the braking distance will be described below. The tautness of the handrail belt may be detected by comparing the speed of the handrail belt and the step tread speed or be detected by self-comparison. For example, generally, when the handrail belt speed is slower than the step/tread speed or than its previous speed or sometimes slower while sometimes in a normal speed, then the tautness of the handrail belt is lower. In addition, the tautness of the handrail belt may also be detected according to a physical position of the handrail belt, for example, whether the handrail belt droops or becomes slack, etc. The component temperature may be detected by means of an imaging sensor running in an infra-red portion of an electromagnetic spectrum. The running time and down time may be determined by an actual speed of the step tread and an expected speed of the step tread.

In some embodiments, the load data comprises but is not limited to: passenger load data comprising: the number of passengers, the body shape and appearance of a passenger, and a dress color of a passenger; and object load data comprising: an object shape, an object size and an object category. For example, whether a passenger is the old, the disabled, a child, etc. may be recognized, and a baby stroller, a wheelchair, etc. may be recognized.

In some embodiments, the contingency data comprises but is not limited to: accident data and component failure data. For example, the accident data comprises a passenger falling down, a passenger tumbling, a passenger being stuck, foreign matter involvement, a fire, etc., and for example, the component failure data comprises a comb teeth defect, a step damage or missing, a cover plate damage or a missing indicator light damage.

The collection mentioned above generally comprises the image processing module comparing the image data and/or depth map data collected by the imaging sensor and/or depth sensing sensor with background image data and/or depth map data pre-stored in the system to judge a target feature, particularly comprising:
in some embodiments, the method for collecting the data mentioned above comprising:
   a data frame acquisition step: sensing a monitoring region of the passenger transport apparatus to acquire a data frame;
   a background acquisition step: acquiring a background model based on a data frame sensed in a normal state in the monitoring region;
   a foreground detection step: performing differential processing on the data frame sensed in real time and the background model to obtain a foreground object;
   a foreground feature extraction step: extracting a corresponding foreground object marked feature from the foreground object; and
   a state judgement step: judging whether the foreground object belongs to an abnormal group at least based on the foreground object marked feature, and determining that the foreground object belongs to the abnormal group in the case that it is judged as "yes".

In some embodiments, the body shape and appearance of a passenger are defined based on the method mentioned above and based on a data frame sensed in a normal state in a monitoring region of the passenger transport apparatus and/or a skeleton graph model and/or a shading image model and/or a human body self-learning model. The dress color of a passenger may be directly collected by means of an imaging apparatus which is able to collect color information.

In some embodiments, the method further comprises the extracted foreground object marked feature comprising the color and/or size and/or speed of a human body in a foreground object; and judging whether the foreground object belongs to an abnormal group based on the color and/or size and/or speed of the human body in the foreground object.

In some embodiments, the method further comprises, when the color and/or size and/or speed of a human body in a foreground object fall/falls within the abnormal human body model, judging that the foreground object belongs to an abnormal group.

In some embodiments, the method further comprises an abnormal object model generation sub-step: configured to define an abnormal object model based on a data frame sensed in a normal state in a monitoring region of the passenger transport apparatus and/or an object self-learning model.

In some embodiments, the method further comprises the extracted foreground object marked feature further comprising the size and/or shape of an object in a foreground object; and
in some embodiments, the method further comprise judging whether the foreground object belongs to an abnormal group based on the size and/or shape of the object in the foreground object.

In some embodiments, the method further comprises, when the size and/or shape of an object in a foreground object fall/falls within the abnormal object model, judging that the foreground object belongs to an abnormal group.

In some embodiments, the method further comprises, when the foreground object belongs to the abnormal group, further extracting a foreground object marked feature corresponding to the surrounding of the abnormal group from the foreground object; and further judging that the foreground object is in an abnormal state at least based on the foreground object marked feature corresponding to the surrounding of the abnormal group, and determining that the foreground object is in the abnormal state in the case that it is judged as "yes".

In some embodiments, the method further comprises a pet model generation sub-step, where a pet model is defined based on a data frame sensed in a normal state in a monitoring region of the passenger transport apparatus and/or a pet self-learning model.

In some embodiments, the extracted foreground object marked feature comprises the shape and/or size and/or shape of a pet in a foreground object; and whether the foreground object belongs to an abnormal group is judged based on the shape and/or size and/or color of the pet in the foreground object.

In some embodiments, the method further comprises, when the size and/or shape of a pet in a foreground object fall/falls within the pet model, judging that the foreground object belongs to an abnormal group.

In some embodiments, the method further comprises a trajectory generation step: generating a change trajectory with regard to a foreground object marked feature according to the foreground object marked feature extracted in a foreground object corresponding to a plurality of continuous data frames respectively.

In some embodiments, the method further comprises judging whether a foreground object is about to belong to an abnormal group in advance based on a change trajectory of the foreground object marked feature, and determining that the foreground object is about to belong to the abnormal group in the case that it is judged as "yes".

In some embodiments, the method further comprises determining that the foreground object belongs to an abnormal group when judgement results of at least two continuous data frames are both that the foreground object belongs to an abnormal group.

In some embodiments, the method further comprises sensing and acquiring data frames within a pre-determined time period after every pre-determined time period for the processing apparatus to perform data processing.

In some embodiments, the method further comprises a warning step: triggering a warning unit to work in the case of determining that the foreground object belongs to an abnormal group.

In some embodiments, a method for detecting an engagement state between a step and a comb plate of a passenger transporter comprises:
sensing an engagement part of at least a step and a comb plate of the passenger transporter by a depth sensing sensor to acquire a depth map;
acquiring a background model based on a depth map sensed when the passenger transporter is in no load and the engagement state is in a normal state;
performing differential processing on the depth map sensed in real time and the background model to obtain a foreground object; and
performing data processing at least based on the foreground object to judge whether the engagement state is in the normal state.

In some embodiments, the method further comprises, sensing an engagement part of the step and the comb plate comprising sensing engagement teeth of the step, and in the step of judging the engagement state, judging the engagement state as an abnormal state when at least one of the engagement teeth is damaged.

In some embodiments, a method for detecting foreign matter involvement, for example, foreign matter involvement in an entry of a handrail, comprises:
sensing at least a part of a handrail entry region of the passenger transporter by means of the imaging sensor and/or depth sensing sensor to acquire a data frame; and
analyzing the data frame to monitor whether the handrail entry of the passenger transporter in running is in a normal state or an abnormal state,
wherein the normal state refers to the fact that neither a foreign matter is about to enter nor at least a part has been located in a dangerous region of the handrail entry, and the abnormal state refers to the fact that a foreign matter is about to enter or at least a part has been located in the dangerous region of the handrail entry.

In some embodiments, the method further comprises:
acquiring a background model based on a data frame sensed when the handrail entry of the passenger transporter is in a normal state;
comparing the data frame sensed in real time and the background model to obtain a foreground object;
extracting a corresponding position feature from the foreground object; and
judging whether the foreground object is in a dangerous region of the handrail entry at least based on the position feature, and determining that the handrail entry is in an abnormal state in the case that it is judged as "yes".

In addition, in some embodiments, a method for detecting that a step tread is missing comprises:
sensing a monitored object of the passenger transporter to acquire a data frame;
acquiring a background model in advance based on a data frame sensed when the monitored object is in a normal state or an abnormal state;
performing differential processing on the data frame sensed in real time and the background model to obtain a foreground object; and
performing data processing at least based on the foreground object to judge whether the monitored object is in the normal state.

In some embodiments, the method further comprises extracting a corresponding foreground feature from the foreground object according to the monitored object,
wherein in the judgement step, whether the monitored object is in a normal state is judged based on the foreground feature.

In some embodiments, the method further comprises, the monitored object comprising a landing plate of the passenger transporter, and in the judgement step, judging that the monitored object is in an abnormal state when the landing plate is shifted or missing.

In some embodiments, the method further comprises, in the step of extracting a foreground feature, the extracted foreground feature comprising the shape, size and position of a foreground object; and in the judgement step, judging whether the landing plate is shifted or missing based on the shape, size and position of the foreground object.

In some embodiments, the method further comprises, the monitored object comprising a security fence used by the passenger transporter in a working condition of maintenance and repair, and in the judgement step, judging that the monitored object is in an abnormal state when the security fence is missing and/or placed inappropriately.

In some embodiments, the abnormal behavior of a passenger comprises but is not limited to: carrying a pet, carrying a cart, carrying a wheelchair, carrying an object exceeding the standard and carrying any abnormal item, and climbing, going in a reverse direction, not holding a handrail, playing with a mobile phone, a passenger being in an abnormal position and any dangerous behavior.

In some embodiments, collecting an abnormal behavior may be implemented by the following method, the method further comprising:
a data frame acquisition step: sensing a monitoring region of the passenger transport apparatus to acquire a data frame;
a background acquisition step: acquiring a background model based on a data frame sensed in a normal state in the monitoring region;
a foreground detection step: performing differential processing on the data frame sensed in real time and the background model to obtain a foreground object;
a foreground feature extraction step: extracting a corresponding foreground object state feature from the foreground object; and
a state judgement step: judging whether the foreground object is in an abnormal state at least based on the foreground object state feature, and determining that the foreground object is in the abnormal state in the case that it is judged as "yes".

In some embodiments, the method further comprises a scene model generation sub-step: configured to define a dangerous region based on a data frame sensed when a monitoring region of the passenger transport apparatus is in a normal state and/or a scene self-learning model.

In some embodiments, the method further comprises, the extracted foreground object state feature comprising the speed and/or accelerated speed and/or target intensity of the foreground object, and judging whether the foreground object is in an abnormal state based on the speed and/or accelerated speed and/or target intensity of the foreground object in the dangerous region.

In some embodiments, the method further comprises judging that a foreground object is in an abnormal state when the speed of the foreground object in the extracted foreground object state feature exceeds a set speed threshold value; and/or
judging that the foreground object is in an abnormal state when the accelerated speed of the foreground object in the extracted foreground object state feature exceeds a set accelerated speed threshold value; and/or
judging that the foreground object is in an abnormal state when the target intensity of the foreground object in the extracted foreground object state feature exceeds a set target intensity threshold value.

In some embodiments, the method further comprises an abnormal human body action model generation sub-step: configured to define an abnormal human body action model based on a data frame sensed when a monitoring region of the passenger transport apparatus is in a normal state and/or a skeleton graph model and/or a shading image model and/or a human body self-learning model.

In some embodiments, the method further comprises, the extracted foreground object state feature comprising a human body action in the foreground object; and
judging whether the foreground object is in an abnormal state based on the human body action in the foreground object.

In some embodiments, the method further comprises, when the human body action in the foreground object falls within the abnormal human body action model, judging that the foreground object is in an abnormal state.

In some embodiments, the method further comprises a scene model generation sub-step: defining a dangerous region based on a data frame sensed when a monitoring region of the passenger transport apparatus is in a normal state and/or a scene self-learning model.

In some embodiments, the method further comprises:
the extracted foreground object state feature comprising a human body position and action in the foreground object, and
judging whether the foreground object is in an abnormal state based on the human body position and the human body action in the foreground object.

In some embodiments, the method further comprises, when the human body position in the foreground object falls within the dangerous region and the human body action in the foreground object falls within the abnormal human body action model, judging that the foreground object is in an abnormal state.

In some embodiments, the method further comprises a trajectory generation step: generating a change trajectory with regard to a foreground object state feature according to the foreground object state feature extracted in a foreground object corresponding to a plurality of continuous data frames respectively.

In some embodiments, the method further comprises judging whether the foreground object is about to enter an abnormal state in advance based on a change trajectory of the foreground object state feature, and determining that the foreground object is about to enter the abnormal state in the case that it is judged as "yes".

In some embodiments, the method further comprises, the extracted foreground object state feature comprising the speed and/or accelerated speed and/or target intensity of the foreground object; and
judging whether the foreground object is about to enter an abnormal state based on a change trajectory of the speed and/or accelerated speed and/or target intensity of the foreground object in the dangerous region.

In some embodiments, the method further comprises judging that the foreground object is about to enter an abnormal state when a speed change trajectory of the foreground object exceeds a set speed trajectory threshold value within a pre-set time period; and/or
judging that the foreground object is about to enter an abnormal state when an accelerated speed change trajectory of the foreground object exceeds a set accelerated speed trajectory threshold value within a pre-set time period; and/or
judging that the foreground object is about to enter an abnormal state when a target intensity change trajectory of the foreground object exceeds a set target intensity trajectory threshold value within a pre-set time period.

In some embodiments, the method further comprises:
the foreground object state feature extracted by the foreground feature extraction module comprising a human body action in the foreground object; and
judging whether the foreground object is about to enter an abnormal state based on a change trajectory the human body action in the foreground object.

In some embodiments, the method further comprises judging that the foreground object is about to enter an abnormal state when a change trajectory of a human body action in the foreground object exceeds a set action trajectory threshold value within a pre-set time period.

In some embodiments, the method further comprises:
the foreground object state feature extracted by the foreground feature extraction module further comprising a human body position in the foreground object; and
judging whether the foreground object is about to enter an abnormal state based on a change trajectory the human body position and the human body action in the foreground object.

In some embodiments, the method further comprises judging that the foreground object is about to enter an abnormal state when a change trajectory of a human body position in the foreground object approaches the dangerous region within a pre-set time period, and a change trajectory of a human body action in the foreground object exceeds a set action trajectory threshold value within the pre-set time period.

In some embodiments, the method further comprises determining that the foreground object is in an abnormal state when judgement results of at least two continuous data frames are both that the foreground object is in the abnormal state.

In some embodiments, the method further comprises sensing and acquiring data frames within a pre-determined time period after every pre-determined time period for the processing apparatus to perform data processing.

In some embodiments, the method further comprises a warning step: triggering the warning unit to work in the case of determining that the foreground object is in an abnormal state.

In one embodiment, the step of acquiring a running speed of an automatic escalator by virtue of the imaging sensor and/or depth sensing sensor and the image processing module 102 comprises:
sensing at least a part of the passenger transporter by means of the imaging sensor and/or depth sensing sensor to acquire sequence frames;
calculating a shift of a corresponding feature point (for example, a step tread or a passenger) in frame coordinates between any two frames in the sequence frames based on an optical flow method;
converting the shift of the feature point in the frame coordinates into a shift in global spatial coordinates by using scales under the imaging sensor or depth sensing sensor;
determining a time amount between any two frames in the sequence frames; and
obtaining by calculation speed information about corresponding time points of any two frames based on the shift of the feature point in the global spacial coordinates and the corresponding time amount, and further combining the same to obtain speed information about the sequence frames.

In one embodiment, acquiring a braking distance of an automatic escalator by virtue of the imaging sensor and/or depth sensing sensor and the image processing module 102 comprises:
in the step of acquiring sequence frames, the imaging sensor and/or depth sensing sensor starting to acquire the sequence frames at the same time when a working condition of braking is triggered;
wherein the speed detection method further comprises the steps of:
   obtaining by calculation, based on the speed information, speed change information about sequence frames corresponding to a time period from the time when the working condition of braking is triggered to the time when a step, a passenger or any other detectable point slows down to 0, and
   obtaining by calculation, at least based on the speed information, braking distance information corresponding to a time period from the time when the working condition of braking is triggered to the time when the step slows down to 0.

In one embodiment, the method for acquiring foreign matter involvement, for example, foreign matter involvement in an entry of a handrail, by virtue of the imaging sensor and/or depth sensing sensor and the image processing module 102 comprises:
sensing at least a part of a handrail entry region of the passenger transporter by means of the imaging sensor and/or depth sensing sensor to acquire a data frame; and
analyzing the data frame to monitor whether the handrail entry of the passenger transporter in running is in a normal state or an abnormal state,
wherein the normal state refers to the fact that neither a foreign matter is about to enter nor at least a part has been located in a dangerous region of the handrail entry, and the abnormal state refers to the fact that a foreign matter is about to enter or at least a part has been located in the dangerous region of the handrail entry.

In one embodiment, the method for acquiring a passenger being in an abnormal position by virtue of the imaging sensor and/or depth sensing sensor and the image processing module 102 comprises:
an image acquisition step: sensing a monitoring region of the passenger transport apparatus to acquire a data frame;
a background acquisition step: acquiring a background model based on a data frame sensed in a normal state in the monitoring region;
a foreground detection step: performing differential processing on the data frame sensed in real time and the background model to obtain a foreground object;
a foreground feature extraction step: extracting a corresponding foreground object state feature from the foreground object; and
the extracted foreground object state feature comprising a human body position and action in the foreground object, and
judging whether the foreground object is in an abnormal state based on the human body position and the human body action in the foreground object.

It should be understood that the method for acquiring various data mentioned above is merely exemplary, and those of skills in the art also master or may come up with more methods for acquiring a plurality of types of data by virtue of the imaging sensor and/or depth sensing sensor 101 and the image processing module 102, while the various methods cannot be completely enumerated herein.

A large volume of a plurality of types of data may be constantly collected for analysis and research because of the cooperation of the imaging sensor and/or depth sensing sensor and the image processing module, which is significantly superior to the traditional sensor or a single-purpose 2D imaging sensor. However, in some embodiments, the data collection module 100 of the present invention further comprises any other sensors, so as to obtain more data. The various data may be fed back constantly to the statistical analysis unit 300 so as to provide an emergency measure in time, and the statistical analysis unit 300 may perform statistics and analysis on big data based on any known technical means or new technical means, provide a component health report, propose an improvement suggestion, and perform remote diagnosis on a device or dispatch a worker to the site for maintenance and replacement. As will be described in detail below, the statistical analysis unit 300 may further predict a failure based on statistical analysis. For example, in some embodiments, the statistical analysis unit 300 may find a relationship between particular data and a particular component failure by statistical analysis of big data, for example, a relationship between a component running time and a component failure, a relationship between a component down time and a component failure, a relationship between a braking distance change and a braking apparatus failure, a relationship between a component working temperature curve or the number of times of cold start and a component failure, a relationship between the tautness of a handrail belt and a handrail belt failure, a relationship between the quantity of loaded passengers or a passenger load curve and a passenger load-relevant component failure, a relationship between an abnormal passenger behavior and a failed component, and so on. Based on these relationships, the failure prediction of the statistical analysis unit 300 may be Bayesian reasoning based on a physical model and/or empirical model which calculates parameters from big data by, for example, a least square method, wherein the empirical model comprises a component ageing model, the component ageing model being a Weibull distribution, a Rayleigh model, a learning empirical distribution model, a high cycle fatigue (HCF) model, a low cycle fatigue (LCF) model and/or a small probability event statistical model, for example, an extreme value statistical model. The statistical analysis unit 300 may further comprise a learning module, the learning module comparing a predicted failure with an actual failure to correct the parameters of the physical model and/or empirical model. Practical maintenance data may be utilized based on, for example, Bayesian estimation, to continuously update the model, and the physical model and/or empirical model may be corrected when there is a difference between the predicted failure and the actual failure to make the model better.

In some embodiments, the data collection module 100 is able to collect braking distance data of the passenger transport apparatus; the statistical analysis unit 300 performs statistics and analysis on the braking distance data, and provides a health report periodically; and the statistical analysis unit 300 predicts a failure in a braking apparatus of the passenger transport apparatus based on a change of the braking distance data and a physical model and/or empirical model.

In some embodiments, the data collection module 100 is further able to collect the number of borne people, for example, the data collection module 100 comprises: an imaging sensor and/or depth sensing sensor provided at the top of an entry end and an exit end of the passenger transport apparatus, configured to constantly collect image data and/or depth map data in an entry end region and an exit end region of the passenger transport apparatus; an image processing module, configured to process the image data and/or depth map data to acquire and record the shape and color of a target in the image data and/or depth map data, judge whether the target is a person or not, and make a record when a person is recognized; and a counter, the counter being set as zero when there is no person on the passenger transport apparatus; and when a person who has not been recorded is recognized at the entry end, adding 1 to a boarding counter and recording time information, when a person who has been recorded is recognized at the exit end, adding 1 to a drop-off counter and recording time information, with the difference between the boarding counter and the drop-off counter at any moment being the number of passengers at that time. The statistical analysis unit 300 is able to perform statistics and analysis on a curve of the number of borne people of the passenger transport apparatus in each time period, and determine an important component load curve on this basis. In some embodiments, the statistical analysis unit 300 is further connected with a passenger transport apparatus control system, the control system adjusting a running direction and running speed of the passenger transport apparatus based on the curve of the number of borne people.

Now Figs. 2-8 will be referred to for detailed description of the big data analysis and processing method for a passenger transport apparatus and applications thereof according to some embodiments of the present invention. Specifically, the method comprises:
S 1, collecting data;
S2, performing statistics and analysis; and
S3, providing a state-based service.

More specifically, refer to Fig. 3, where the step S1 of collecting data further comprises S11, utilizing an imaging sensor and/or depth sensing sensor to constantly collect image data and/or depth map data of at least one region of the passenger transport apparatus, and S12, utilizing an image processing module to process the image data and/or depth map data to at least acquire a plurality of types of data of the passenger transport apparatus, comprising device running data, load data, abnormal behavior data and contingency data. Optionally, the step of collecting data further comprises S13 of using a sensor other than the imaging sensor and/or depth sensing sensor to acquire data of the passenger transport apparatus. For example, in some embodiments, the passenger transport apparatus may comprise a plurality of other existing sensors, and these sensors comprise but are not limited to a speed sensor, a temperature sensor, a pressure sensor, a displacement sensor, a photoelectric sensor, etc., and these sensors may likewise collect a plurality of types of data and provide the data to a database as a part of big data. For example, the speed sensor may be a speed sensor based on the rotation speed of the principal axis of the escalator, and the collected data thereof may be combined and compared with the data of the imaging sensor and/or depth sensing sensor, and the data obtained by the two sensors is processed based on a statistical analysis method to obtain more accurate and reliable data. In some embodiments, a displacement-based sensor may be used to sense conditions such as foreign matter involvement. In some embodiments, these data obtained by other sensors may serve as a supplement for the data collected by the imaging sensor and/or depth sensing sensor, or the data collected by the imaging sensor and/or depth sensing sensor is calibrated and verified, so that the data will become more accurate, reliable and comprehensive.

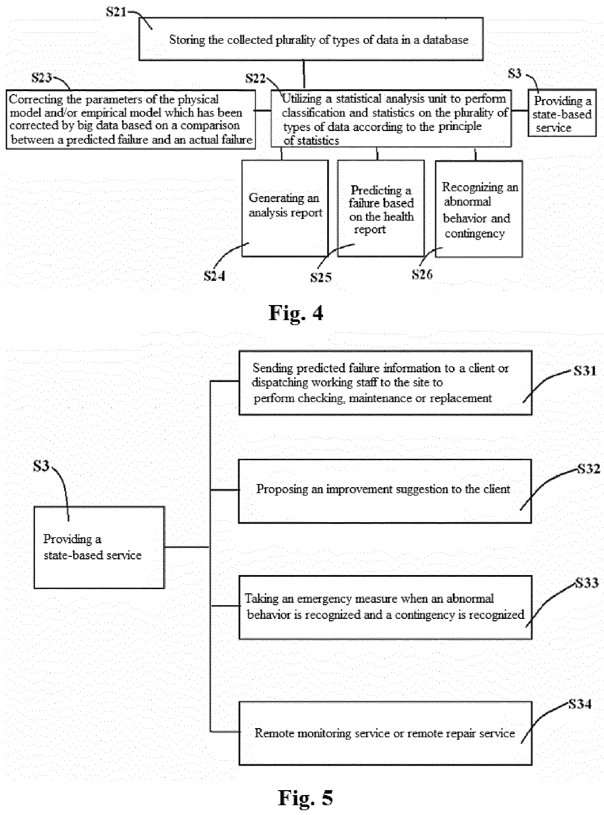

Continuously refer to Fig. 4, where the step S2 of performing statistics and analysis first comprises S21, storing the collected plurality of types of data in a database, and S22, utilizing a statistical analysis unit to perform classification and statistics on the plurality of types of data according to a statistical analysis method, and S24, generating an analysis report, wherein the analysis report may comprise a health report, a daily running record, a daily failure record, an inappropriate behavior record and so on. Optionally, the step S2 further comprises: S25, utilizing the statistical analysis unit to provide a health report of the passenger transport apparatus periodically or aperiodically based on statistical analysis; and predicting a failure based on statistics and analysis. The step of predicting a failure further comprises the statistical analysis unit performing Bayesian reasoning based on a physical model and/or empirical model which calculates parameters from big data by, for example, a least square method, wherein the empirical model comprises a component ageing model, the component ageing model being a Weibull distribution, a Rayleigh model, a learning empirical distribution model, a high cycle fatigue (HCF) model, a low cycle fatigue (LCF) model and/or a small probability event statistical model, for example, an extreme value statistical model. Optionally, in some embodiments, the step S2 further comprises S23 of correcting the parameters of the physical model and/or empirical model which calculates the parameters from big data (for example, via a least square method) based on a comparison between a predicted failure and an actual failure, so that the prediction model may gradually become better, and is more accurate in prediction. For example, in an embodiment of predicting a braking apparatus failure, the braking apparatus failure time may be a function of the braking distance, and the parameters of the function may be corrected according to a relationship between an actual braking distance and the braking apparatus failure. Optionally, the step S2 further comprises recognizing an abnormal behavior and contingency.

Continuously refer to Fig. 5, where the step S3, providing a state-based service, may comprise step S31, sending predicted failure information to a client or dispatching technical staff to the site to perform checking, maintenance or replacement; step S32, proposing an improvement suggestion to the client based on statistical analysis, wherein in some embodiments, the client is suggested to enhance site management based on abnormal behaviors of passengers, comprising suggesting to set up a fence and suggesting to enhance security; in some embodiments, the client may be suggested to set the running state of the automatic escalator based on a peak/off-peak curve of people or the client is suggested to add an automatic escalator for shunting in the case where the automatic transport system is always overloaded; and in some embodiments, an accident reason may be obtained based on data statistics and analysis, and the client is suggested to make a corresponding improvement, for example, if the accident is caused because a component has been working at a high temperature in a long time, then the client may be suggested to add a heat dissipation apparatus, etc.; step S33, taking an emergency measure when an abnormal behavior is recognized and a contingency is recognized, such as giving out warning, calling the police or calling for ambulance; and step S34, providing remote monitoring service or a remote repair and diagnosis service, etc. Compared to the prior art, in the method which utilizes the embodiments of the present invention, technical staff have received a predicted failure warning and may go to the site for maintenance before a failure actually happens, rather than performing reactive repair after the failure occurs; in addition, the technical staff on the site or around are dispatched to the scene at the first time when an emergency occurs.

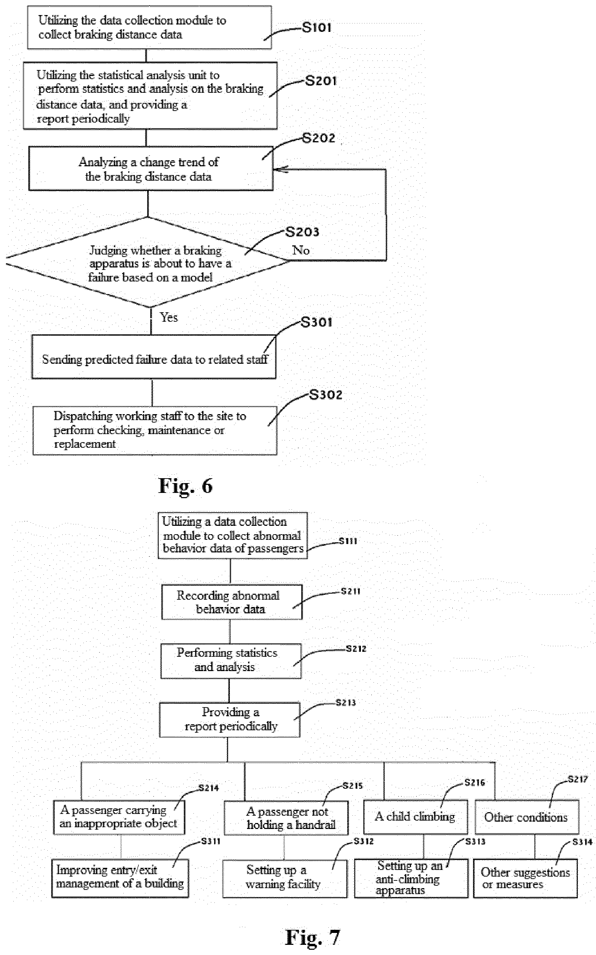

Refer to Fig. 6, which is an embodiment of an application of a big data analysis and processing method for a passenger transport apparatus, the application is mainly configured to monitor and predict a braking apparatus failure condition of the passenger transport apparatus based on a large volume of collected data. In the embodiment, in step S101, the data collection module is utilized to collect braking distance data; in step S201, the statistical analysis unit is utilized to perform statistics and analysis on the braking distance data, and a report is provided periodically; in step S202, a braking distance change trend is analyzed, and in step S203, a change trend of braking distance data is compared, and the statistical analysis unit predicts whether a braking apparatus of the passenger transport apparatus is about to have a failure based on a physical model and/or empirical model, for example, in one embodiment, a pre-warning value of the braking distance may be set according to braking distance changes of a plurality of automatic escalator apparatuses collected previously and a relationship with a braking apparatus failure, and it may be predicted that the braking apparatus will have a failure within a certain time when the braking distance continuously increases and exceeds the pre-warning value, and working staff can be dispatched immediately or as soon as possible to the site to perform appropriate maintenance on the braking apparatus, wherein the pre-warning value of the braking distance may be obtained according to statistical analysis of previous data of each automatic escalator, and the statistical analysis method may use various known conventional methods in the art. If the braking distance has not changed, then the step S202 mentioned above is repeated, and if the braking distance has changed, the method proceeds to step S301, comprising sending predicted failure data to technical staff and/or an operator; and step S302, dispatching the technical staff to the site to perform component checking, maintenance or replacement.

Refer to Fig. 7, which is another embodiment of an application of a big data analysis and processing method for a passenger transport apparatus. The method comprises, in step S111, utilizing an imaging sensor and/or depth sensing sensor of a data collection module to collect abnormal behavior data of passengers, and in step S211, recording abnormal behavior data; in step S212, utilizing the statistical analysis unit to perform statistics and analysis on the abnormal behavior data of passengers, and in step S213, providing a report periodically; and in step S214, when the report prompts in a relatively large number of times that passengers carry inappropriate objects, then performing step S311, suggesting that a client improves entry/exit management of a building; when the report prompts in a relatively large number of times that passengers do not hold a handrail in step S215, performing step S312, suggesting that the client sets up a warning facility; when the report prompts in a relatively large number of times of children climbing in step S216, then performing step S313, suggesting that the client sets up an anti-climbing apparatus; and when other conditions are reported in step S217, then performing step S314, providing other appropriate suggestions or taking corresponding measures.

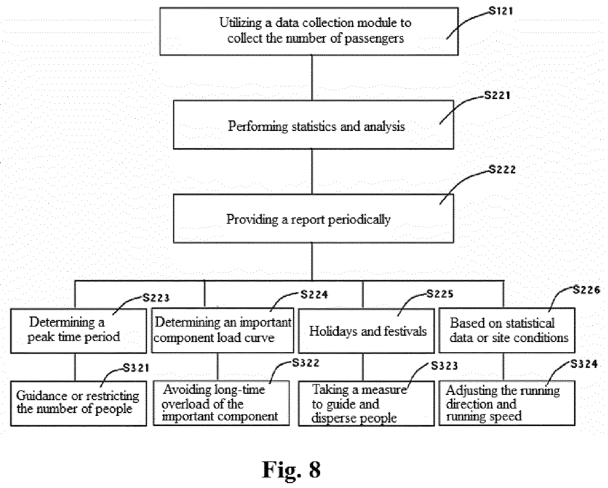

Refer to Fig. 8, which is another embodiment of an application of a big data analysis and processing method for a passenger transport apparatus. The method comprises: step S121, utilizing a data collection module to collect the number of borne people, one embodiment of collecting the number of borne people having been described in detail above; and in step S221, performing statistics and analysis on data of the number of borne people; in step S222, providing a report periodically; and in step S223, obtaining a peak/off-peak curve of people, and determining a peak time period, and performing step S321, taking a measure of guidance or restricting the number of people at the entry of the passenger transport apparatus in the peak time period, for example, various means such as broadcasting, mobile phone information, etc. may be used to notify a passenger to keep clear or select other paths; in addition, optionally, in step S224, utilizing the statistical analysis unit to perform statistics and analysis on the number of borne people of the passenger transport apparatus in each time period, and determining an important component load curve on this basis; and in step S322, predicting the service life of the important component or suggesting or giving out warning to avoid long-time overload of the important component based on the important component load curve; and/or sending predicted failure data to technical staff and/or an operator or dispatching the technical staff to the site to perform working of checking, maintenance or replacement, wherein the predicting the service life of the important component based on the important component load curve may, for example, comprise: collecting load data regarding the important component from a plurality of automatic escalators, such as the total number of people borne every day; setting a numerical value of passenger overload, and collecting component overload running time from the plurality of automatic escalators; collecting failure information regarding the important component from the plurality of automatic escalators; performing statistics and analysis on the important component, for example, how many passengers are borne on average so that the component is caused to have a failure, or how much the overload running time exceeds so that a failure occurs, and establishing a model, wherein, for example, the model may be a function of the total number of borne people and overload time; and predicting a failure of the component in various load curves according to a statistical analysis result. In addition, optionally, step S225 comprises judging holidays and festivals, and then step S323, a measure to guide and disperse people is taken on holidays and festivals. In addition, optionally, the running direction and running speed of the passenger transport apparatus may be controlled based on the number of people at the entry end and the exit end detected on the site or based on the curve of the number of borne people, for example, when there are relatively few passengers, the automatic escalator may be set as bidirectional sensed running, and other automatic escalators are shut down, and when there is a relatively large number of passengers, the speed of the automatic escalator may be increased within a controllable range.

It should be understood that a limited number of embodiments are adopted to describe the big data analysis and processing system and method for a passenger transport apparatus according to the present invention in detail; however, those of skills in the art may implement more applications of the system and method of the present invention based on a large volume of a variety of data collected and statistical analysis means, and these applications will not depart from the scope of the present invention.

It should be understood that in the applications mentioned above, one item of data in one type of data in a plurality of types of data is merely used for statistical analysis; however, in other embodiments, the analysis may also be performed based on a plurality of items of data in one type of data or based on a plurality of items in a plurality of types of data. The collection of a large volume of data enables various statistical analyses to have a solid foundation, so that a better analysis conclusion and wider applications may be obtained.

The advantages of the big data analysis and processing system and method for a passenger transport apparatus of the present invention comprise but are not limited to: an improved service, better security and a reduced cost, more particularly comprising but not limited to: 1. providing a failure reminding in advance; 2. performing component maintenance in advance; 3. sharing data with a client to analyze the source of a failure or accident; 4. providing a fast reaction service; and 5. sharing data with a research department to improve the product design.

It should be understood that all the above preferred embodiments are exemplary rather than limiting, and various modifications or variants made on the specific embodiments described above by those of skills in the art within the concept of the present invention shall all fall within the scope of legal protection of the present invention.

## Claims

1. A big data analysis and processing system for a passenger transport apparatus, the big data analysis and processing system comprising:
a data collection module, the data collection module comprising:
a sensor assembly, configured to collect image data and/or depth map data, and
an image processing module, configured to process the image data and/or depth map data to acquire a plurality of types of data of the passenger transport apparatus, comprising one or more of device running data, load data, abnormal behavior data and contingency data;
a database, the database gathering and storing the plurality of types of data; and
a statistical analysis unit, the statistical analysis unit performing classification and statistics on the plurality of types of data according to a statistical analysis method, and generating an analysis report.

2. The big data analysis and processing system according to claim 1, wherein:
the sensor assembly comprises an imaging sensor and/or depth sensing sensor, configured to constantly collect image data and/or depth map data of at least one region of the passenger transport apparatus; and/or
the data collection module comprises an imaging sensor and/or depth sensing sensor provided at the top of an entry end and/or exit end of the passenger transport apparatus; and/or
the data collection module comprises an RGB-D sensor integrating an imaging sensor and a depth sensing sensor and provided at the top of an entry end and/or exit end of the passenger transport apparatus.

3. The big data analysis and processing system according to claim 1 or 2, wherein:
the device running data comprises: one or more of a running speed, a braking distance, tautness of a handrail belt, a component temperature, a running time and a down time; and/or
the load data comprises:
passenger load data comprising one or more of the following: the number of passengers, the body shape and appearance of a passenger, and a dress color of a passenger; and
object load data comprising one or more of the following: an object shape, an object size and an object category; and/or
the contingency data comprises: accident data and component failure data; and/or
the abnormal behavior data comprises one or more of the following: carrying a pet, carrying a cart, carrying a wheelchair, carrying an object exceeding the standard and carrying any abnormal item, and climbing, going in a reverse direction, not holding a handrail, playing with a mobile phone, a passenger being in an abnormal position and any dangerous behavior.

4. The big data analysis and processing system according to any preceding claim, wherein the database is distributed at each passenger transport apparatus or is arranged in a centralized manner, and the database can be accessed via a network.

5. The big data analysis and processing system according to any preceding claim, wherein the data collection unit further comprises other sensors which are able to acquire data of the passenger transport apparatus.

6. The big data analysis and processing system according to any preceding claim, wherein the statistical analysis unit provides a health report of the passenger transport apparatus periodically or aperiodically based on statistical analysis, and
optionally the statistical analysis unit predicts a failure based on statistical analysis, and
further optionally the failure prediction of the statistical analysis unit is Bayesian reasoning based on a physical model and/or empirical model which calculates parameters from big data by, for example, a least square method, and
further the empirical model comprises a component ageing model, the component ageing model being a Weibull distribution, a Rayleigh model, a learning empirical distribution model, a high cycle fatigue model, a low cycle fatigue model and/or a small probability event statistical model, the small probability event statistical model comprising an extreme value statistical model, and/or
further optionally the statistical analysis unit comprises a learning module, the learning module correcting the parameters of the physical model and/or empirical model based on practical maintenance data.

7. The big data analysis and processing system according to preceding claim, wherein:
the data collection module is able to collect braking distance data of the passenger transport apparatus;
the statistical analysis unit performs statistics and analysis on the braking distance data, and provides a health report periodically; and
the statistical analysis unit predicts a failure in a braking apparatus of the passenger transport apparatus based on a change of the braking distance data and a physical model and/or empirical model.

8. The big data analysis and processing system according to any preceding claim, wherein the data collection module is also able to collect the number of borne people, wherein
the data collection module comprises:
an imaging sensor and/or depth sensing sensor provided at the top of an entry end and an exit end of the passenger transport apparatus, configured to constantly collect image data and/or depth map data in an entry end region and an exit end region of the passenger transport apparatus;
an image processing module, configured to process the image data and/or depth map data to acquire and record the shape and color of a target in the image data and/or depth map data, judge whether the target is a person or not, and record a recognized person; and
one or more counters configured to record the recognized person; and
optionally the statistical analysis unit is able to perform statistics and analysis on a curve of the number of borne people of the passenger transport apparatus in each time period, and determine an important component load curve on this basis; and
further optionally the statistical analysis unit is further connected with a passenger transport apparatus control system, the control system adjusting a running direction and running speed of the passenger transport apparatus based on a constant load condition and/or the curve of the number of borne people.

9. A big data analysis and processing method for a passenger transport apparatus, the big data analysis and processing method comprising:
utilizing a sensor assembly to collect image data and/or depth map data, and
utilizing an image processing module to process the image data and/or depth map data to acquire a plurality of types of data of the passenger transport apparatus, comprising one or more of device running data, load data, abnormal behavior data and contingency data;
storing the collected plurality of types of data in a database, and utilizing a statistical analysis unit to perform classification and statistics on the plurality of types of data according to a statistical analysis method, and generate an analysis report; and
providing a state-based service based on the analysis report.

10. The big data analysis and processing method according to claim 9, wherein:
the method further comprises utilizing an imaging sensor and/or depth sensing sensor to constantly collect image data and/or depth map data of at least one region of the passenger transport apparatus; and/or
the method further comprises providing an imaging sensor and/or depth sensing sensor at the top of an entry end and/or exit end of the passenger transport apparatus; and/or
the method further comprises providing an RGB-D sensor integrating an imaging sensor and a depth sensing sensor at the top of an entry end and/or exit end of the passenger transport apparatus; and/or
the device running data comprises: one or more of a running speed, a braking distance, tautness of a handrail belt, a component temperature, a running time and a down time; and/or
the load data comprises:
passenger load data comprising one or more of the following: the number of passengers, the body shape and appearance of a passenger, and a dress color of a passenger; and
object load data comprising one or more of the following: an object shape, an object size and an object category; and/or
the contingency data comprises: accident data and component failure data; and/or
the abnormal behavior data comprises one or more of the following: carrying a pet, carrying a cart, carrying a wheelchair, carrying an object exceeding the standard and carrying any abnormal item, and climbing, going in a reverse direction, not holding a handrail, playing with a mobile phone and any dangerous behavior; and or
the method further comprises arranging the database at each passenger transport apparatus in a distributed manner or arranging the same in a centralized manner, and enabling the access to the database via a network; and/or
the method further comprises a step of using other sensors to acquire data of the passenger transport apparatus.

11. The big data analysis and processing method according to any one of claims 9 or 10, **characterized in that** the method further comprises:
utilizing the statistical analysis unit to provide a health report of the passenger transport apparatus periodically or aperiodically based on statistical analysis; and
predicting a failure based on statistical analysis; and
optionally the method further comprises performing failure prediction by utilizing Bayesian reasoning based on a physical models and/or empirical model which calculates parameters from big data by, for example, a least square method, by means of the statistical analysis unit; and/or
optionally the empirical model comprises a component ageing model, the component ageing model being a Weibull distribution, a Rayleigh model, a learning empirical distribution model, a high cycle fatigue model, a low cycle fatigue model and/or a small probability event statistical model, the small probability event statistical model comprising an extreme value statistical model; and
further optionally the method further comprises: a step of correcting, based on practical maintenance data, the parameters of the physical model and/or empirical model which calculates the parameters from big data by, for example, a least square method.

12. The big data analysis and processing method according to claim 9, 10 or 11, wherein the method further comprises:
utilizing the data collection module to collect braking distance data;
utilizing the statistical analysis unit to perform statistics and analysis on the braking distance data, and providing a report periodically;
utilizing the statistical analysis unit to predict a failure in a braking apparatus of the passenger transport apparatus based on a change of the braking distance data and a physical model and/or empirical model, and
sending predicted failure data to technical staff and/or an operator or dispatching the technical staff to the site to perform checking, maintenance or replacement.

13. The big data analysis and processing method according to any of claims 9-12, wherein the method further comprises providing an improvement suggestion to a client or providing a failure analysis report to the client based on statistical analysis; and
optionally the method further comprises:
utilizing an imaging sensor and/or depth sensing sensor of a data collection module to collect abnormal behavior data of passengers,
utilizing the statistical analysis unit to perform statistics and analysis on the abnormal behavior data of passengers, and providing a report periodically, and
when the report prompts in a relatively large number of times that passengers carry inappropriate objects, suggesting that a client improves entry/exit management of a building; or
when the report prompts in a relatively large number of times that passengers do not hold a handrail, suggesting that the client sets up a warning facility; or
when the report prompts in a relatively large number of times of children climbing, suggesting that the client sets up an anti-climbing apparatus.

14. The big data analysis and processing method according to any of claims 9-13, wherein the method further comprises enabling the statistical analysis unit to be connected with a security system of the passenger transport apparatus, so as to give out warning information when an abnormal behavior is recognized, or
automatically call the police and/or call for ambulance when contingency data is recognized.

15. The big data analysis and processing method according to any of claims 9-14, wherein the method further comprises utilizing a data collection module to collect the number of borne people, the step of collecting the number of borne people comprising:
utilizing an imaging sensor and/or depth sensing sensor provided at the top of an entry end and an exit end of the passenger transport apparatus to constantly acquire image data and/or depth map data in an entry end region and an exit end region of the passenger transport apparatus;
utilizing an image processing module to perform statistics and record the shape and color of a target in the image data and/or depth map data, compare the same with a pre-set model to judge whether the target is a person or not, and record a recognized person; and
utilizing one or more counters to constantly perform statistics on the number of borne people of the passenger transport apparatus; and
optionally the method further comprises:
(i) utilizing the statistical analysis unit to perform statistics and analysis on a curve of the number of borne people of the passenger transport apparatus in each time period, and determining peak and off-peak time periods; and
suggesting that the client takes a measure of guidance or restricting the number of people at the entry end of the passenger transport apparatus in a peak time period; and/or
(ii) utilizing the statistical analysis unit to perform statistics and analysis on the number of borne people of the passenger transport apparatus in each time period, and determining an important component load curve based on a curve of the number of borne people;
predicting the service life of an important component based on the important component load curve; and
suggesting or giving out warning to avoid long-time overload of the important component; and/or
sending predicted failure data to technical staff and/or an operator or dispatching the technical staff to the site to perform checking, maintenance or replacement; and/or
utilizing a passenger transport apparatus control system to adjust a running direction and running speed of the passenger transport apparatus based on a constant load condition and/or a curve of the number of borne people.
